# EUROPEAN PATENT SPECIFICATION

(11) **EP 2 875 069 B1**
(45) Date of publication and mention of the grant of the patent: **20.09.2017**
(21) Application number: 12745901.4
(22) Date of filing: 17.07.2012
(51) Int. Cl.: C08K 3/00

(54) **PVC FLAME RETARDANT COMPOSITIONS**
FLAMMENHEMMENDE PVC-ZUSAMMENSETZUNGEN
COMPOSITIONS IGNIFUGES DE PVC

(43) Date of publication of application: 27.05.2015
(73) Proprietor: Italmatch Chemicals S.P.A., 16128 Genova (GE) (IT)
(72) Inventor: ZUCCHELLI, Ugo, I-16149 San Benigno (Genova) (IT)
(74) Representative: Trupiano, Federica
(86) International application number: PCT/IB2012/001392
(87) International publication number: WO 2014/013284

(56) References cited:
- WO-A1-91/17207
- WO-A1-2012/113145
- WO-A1-2012/113146
- CN-A- 101 870 790
- DE-A1-102010 035 103

## Description

The present invention relates to flame retardant plasticized PVC compositions free from antimony trioxide.

### BACKGROUND OF THE INVENTION

Polyvinyl Chloride (PVC) is the third-most widely produced plastic, after polyethylene and polypropylene, and can be used in construction. It can be made softer and more flexible by the addition of plasticizers, the most widely used being phthalates, and in this form it is used in clothing and upholstery, electrical cable insulation, inflatable products and many applications in which it replaces rubber. The ongoing scrutiny on phthalates has caused plasticizers producers to concentrate in the research and development of alternative and apparently safer plasticizers, generally called "non-phtalate plasticizers".

DE 10 2010 035103 discloses flame retardant compositions containing triazine (Melamin, Melam and Melem) intercalated metal phosphates having open framework structures (open framework), the use of such metal phosphates, and their preparation. Described compounds are used as flame retardant agents.

WO 91/17207 discloses a method employing calcium phosphite as a light stabilizer and plate-out preventative for polyvinyl chloride. A composition of calcium phosphite and Polyvinyl chloride is also disclosed. Calcium phosphite is disclosed as an additive to polyvinyl chloride. It has two advantages: stabilizes the polymer against UV light and is a plate-out preventative.

CN 101870790 discloses a PVC Ca / Mg / Zn composite stabilizer composition and preparation methods. Furthermore, the stabilizer is prepared by **adding functional** zeolite and an auxiliary stabilizer based on Ca salt, Mg salt and Zn salt, and mainly comprises Ca/Zn and Mg/Zn complex compounds, functional zeolite and auxiliary stabilizers. The method for the preparation of this **Ca/Mg/Zn composite stabilizer** for PVC is also described in details.

WO 2012/113145 discloses a flame retardant polymer composition comprising at least one polymer and a hypophosphite salt wherein the hypophosphite salt is so heat stabilized in certain described conditions that it generates less than 0.5 mL of phosphine per gram of hypophosphite salt.

WO 2012/113146 discloses a flame retardant polymer composition comprising at least one polymer and a hypophosphite salt wherein the hypophosphite salt is so heat stabilized in certain described conditions that it generates less than 0.5 mL of phosphine per gram of hypophosphite salt, the composition further comprising at least an additive improving flame retardant properties.

PVC is inherently resistant to flame. Due to its high chlorine content (57% by weight), PVC will not support combustion in normal environments unless it contains high levels of flammable modifiers. This resistance to combustion makes PVC the material of choice in many applications where fire safety is an issue.

Although PVC by itself has outstanding flame resistance, the majority of plasticizers used to impart flexibility to the PVC polymer, can compromise this important technical characteristic.

Therefore, when PVC polymer is added with plasticizers in order to be flexible and used in many different applications where its flexibility is an issue, it must be also added with suitable Flame Retardant (FR) agents, so that the resulting PVC polymer be flame retarded at least in a satisfactory manner.

Most used Flame Retardant agents are here below indicated.

**Antimony trioxide** is probably the most important flame retardant for PVC, being in use since many years. The most reasonable mechanism for this technical characteristic is based on the fact that antimony trioxide probably reacts with the HCl evolving when PVC burns, forming antimony oxychlorides which then decomposes to antimony trichloride. Antimony trichloride has a boiling point of 283°C and it is thought that participates to the gas phase during combustion of PVC, thus introducing an additional source of chlorine into the flame. This is a possible explanation of the reason why the use of antimony trioxide in PVC generally elevates the smoke level.

Antimony trioxide also yields benefits in PVC formulations containing bromine.

Examples **of bromine based flame retardant** that are commonly used in PVC formulations are brominated phthalate esters, such as, for example, tetrabromo dioctylphthalate, which is described for instance in US 4,397,977. Despite nearly all brominated flame retardants render PVC additionally flame retarded, the critical issues connected with the use of these flame retardant compounds are compatibility with the PVC matrix and effect on compound stability.

**Chlorinated paraffins** find also use in flexible PVC formulations. Like brominated phthalate esters, chlorinated paraffins are used as secondary plasticizers in the preparation of flexible PVC formulations and work by releasing halogen into the vapor phase in order to inhibit combustion. They are available in a wide range of chlorine content, however, chlorinated paraffins with chlorine contents ranging from 40% to 60% are those commonly used in PVC formulations. Long-chain chlorinated paraffins with 70% chlorination by weight are most likely to be used in future due to their favourable toxicological profile. Chlorinated paraffins can be used by partially replacing antimony trioxide.

**Zinc Borate** can be used as a fire retardant component in PVC, partially replacing antimony trioxide.

**Hydrated minerals,** such as alumina tri-hydrate or magnesium hydroxide, can be very effective as flame retardants in PVC polymers. However, depending on the amount of these components in the final PVC formulation, they may adversely affect the flexibility of the final product, causing it to become too stiff. Hydrated minerals work by releasing bound moles of water during combustion, quenching the flame front area.

**Phosphate ester** plasticizers were probably the first flame retardant additives actively used in PVC. Wire and cable insulation products, obtained using phosphate esters as plasticizers, found use in military applications during World War II. Nowadays, phosphate ester plasticizers are use as primary flame retardants in clear flexible PVC formulations. They also find use in the preparation of flexible films, sheeting, and other significant applications where flame test requirements cannot be met with the usual inorganic flame retardant products.

**Molybdenum compounds** as Zinc Molibdate, Ammonium Octamolybdate or **Tin compounds** as Zinc Hydroxystannate or Stannate are flame retardant agents with beneficial effect on smoke opacity. They can be used to partially or totally replace antimony trioxide.

Altough each of these materials shows several significant drawbacks, many of the problems can be solved using synergic combinations of flame retardant agents or different combinations of synergic ingredients in order to get superior fire resistance (see for instance EP0317849, JP-A-58 1856 37, FR 2448544, US 6087428, EP 900294, WO91/01348) or even PVC flame retarded compositions exempt from antimony trioxide and/or with a lower smoke opacity (see for instance US 6245846, US 5342874, US 2010/0003879, US 5227417, US 4272427).

Nowadays, antimony is fairly expensive and, at the 2000 year rate of mine production, it can be allowable for not more than three decades (source: U.S. department of the interior, U.S. geological survey, Open-File Report 03-019).

Most important, increasing environmental and toxicity worldwide global concerns, have led the industry to pursue flame retardant additives which could be used as valid and significant alternatives to antimony trioxide, that, in Europe, is classified in category 3 as an hazardous to man substance for potential carcinogenic effects (JOCE, 1994). Recently, the European Parliament commit on environment, put antimony trioxide on "Annex III" of RoHS, the priority list for Restriction on Hazardous Substances for electrical equipments.

As a consequence, it is important to find real and efficient alternative flame retardant agents which are able to replace antimony trioxide in PVC formulations.

### OBJECT OF THE INVENTION

Object of the present invention is to provide a flame retardant compound that can be used as flame retardant agent in PVC formulations and which is able to completely replace antimony trioxide or any other antimony-based compound in the same formulations, still maintaining the desired flame retardant characteristics.

An additional object of the present invention is to provide the use of a flame retardant compound suitable for PVC formulations able to replace antimony trioxide or any other antimony-based compound in the same formulations.

Still another object of the present invention is to provide flame retardant plasticized PVC formulations free from antimony trioxide that are characterized by satisfying processability, very good chemical and physical properties and reduced smoke density.

Another object of the present invention is to provide a PVC article which is flame retarded according to the international requirement and which is free from antimony trioxide or any other antimony-based compound.

### DESCRIPTION OF THE INVENTION

The essential ingredients in a PVC formulations are: PVC resin, primary plasticizer, primary FR (Flame Retardant) plasticizers, secondary plasticizer or extenders, secondary FR (Flame Retardant) plasticizer, stabilizers, co-stabilizers, lubricants, fillers, colorants, flame retardant agents, other additives.

### PVC resin

There are different kinds of PVC resins grouped together according to the polymerization method used for their production: suspension grade PVC, emulsion grade PVC, bulk polymerized PVC, copolymer PVC, chlorinated PVC (CPVC). Suspension grade PVC is the most widely prevalent type, obtained by polymerizing droplets of vinyl chloride in the monomer form suspended in water. When polymerization is complete, the slurry is centrifuged and the PVC cake thus obtained is gently dried by special heating systems in order to avoid heat degradation of the un-stabilized resin. Particles have porous structures which readily absorbs plasticizers. The structure of the PVC particles can be modified by selecting suitable suspending agents and polymerization catalyst. Less porous types are extensively used for the high volume rigid or un-plasticized PVC applications like PVC pipes, windows, sidings, ductings. Suspension grades of a coarser particle size and very porous structures are able to absorb large quantities of plasticizer instead, thus forming a dry blend at relatively low temperatures, such as, for example, 80°C. Emulsion grade PVC corresponds to paste grade resin and is almost exclusively used for plastisols. Paste grade resin is a very fine particle size PVC produced by spray drying an emulsion of PVC in water. Paste grade resin needs much more energy to be produced and is considerably much expensive than suspension resin. The paste grade resin carries the emulsifying chemicals and catalysts within. It is therefore less pure than suspension polymerized or bulk polymerized PVC. The electrical properties of paste grade resin plastisols are therefore much poorer than suspension resin compounds. Clarity is poorer than the same parameter in suspension or bulk PVC. Paste grade resin is compact in structure, and does not absorb much plasticizer at room temperatures. Temperatures exceeding 160-180°C are needed to drive the plasticizer into the resin during curing.

Bulk polymerized PVC is obtained by polymerization that gives the purest form of PVC resin as no emulsifying or suspending agents are used. The PVC formulations thus obtained are mainly used in transparent applications. They are mainly made available in the lower K value groups.

Copolymer PVC is obtained when vinyl chloride is copolymerized with comonomers such as, for example, vinyl acetate to give a range of resins with unique properties, and they are used in adhesive or coatings.

PVC Resins are classified by their K-Value, an indicator of the molecular weight and degree of polymerization.

K70-75 are high K value resins which give best mechanical properties but are more difficult to process. They need more plasticizer for same softness.

K65-68 are medium K value resins which are the most popular. They have a good balance of satisfactory mechanical properties and processability.

K58-60 are low K-value resins. Their mechanical properties are not so satisfactory, but their processing is easiest.

K50-55 are special resins which are specially made for some demanding applications. Processing is easiest.

Chlorinated PVC (CPVC) is PVC that has been chlorinated via a free radical chlorination reaction. This reaction is typically initiated by application of thermal or UV energy utilizing various approaches. In the process, chlorine gas is decomposed into free radical chlorine which is then reacted with PVC in a post-production step, essentially replacing a portion of the hydrogen in the PVC with chlorine. Depending on the method, a varying amount of chlorine is introduced into the polymer allowing for a measured way to fine tune the final properties. The chlorine content may vary from manufacturer to manufacturer; the base can be as low as PVC 56.7% to as high as 74% by mass, although most commercial CPVC resins have chlorine content from 63% to 69%.

### Primary plasticizers

Plasticizers make the hard PVC resin softer. Primary plasticizers have good compatibility with PVC resins and can be absorbed in large quantities. In special cases up to 140-150 phr of primary plasticizer can be put into PVC formulations for extremely soft products. Phr is defined as part by weight of ingredient per 100 parts of PVC resin. Nearly all plasticizers are liquids and have to be absorbed in suspension resins through heated mixers. High speed mixers (which generate frictional heat while mixing) are the most popular types of dry-blending equipment. There is a vast choice of primary plasticizers for PVC. Some of the requirements plasticizers must satisfy are the following: high compatibility with PVC, good plastic properties, low volatility, good ageing properties, electrolyte-free.

The most popular primary plasticizers are phthalate esters. Phthalic acid is reacted with various alcohols to produce a family of phthalates which can be used as primary plasticizers among which Di Octyl Pthalate (DOP) is the most popular. Other important primary plasticizers are the following:
DINP = Diisononylphthalate
TOTM = Trioctyltrimellitate
DIDP= Diisodecylphthalate
DITP = Diisotridecylphthalate
PVC compounds which need low temperature resistance can be prepared in combination with phthalic acid esters and dicarboxylic acids such as Dioctyladipate (DOA), Dioctylazelate (DOZ) or Dioctylsebacate (DOS). The number of carbon atoms in the alcohol is important for the modification of properties.

Non-phtalate plasticizers are also growing due to some favorable toxicological profile compared to classic phthalate in use from many years. For instance, Di-isononyl-cyclohexane dicarboxylate (DINCH), was developed for use in sensitive applications where exposure to toxicological and exposure issues were of great concern such as the manufacturing of toys, medical devices, and food packaging. Citrates (or citric acid esters) are also use in sensitivity applications since they show benign toxicology. Citrates have been approved to use in applications such as pharmaceutical tablet coatings, medical devices, food packaging (i.e., vinyl film wraps), and cosmetic formulations (i.e., shampoo, deodorants, and fragrances). Terephthalate plasticizer is another example of non-phtalate plasticizer.

### Primary FR (Flame Retardant) plasticizers

Flame retardant plasticizer based on phosphate esters effectively replace and avoid the use of the most flammable component, i.e. the plasticizer itself. Commonly available phosphate ester plasticizers are of three major types: triaryl phosphates, alkyl diaryl phosphates, and their mixtures. Although most phosphate ester plasticizers can be used as primary plasticizers, they are usually blended with lower costly phthalate ester plasticizers to obtain the desired performances at a minimum loading. The blend is required because they are quite expensive than standard plasticizers, and also because they are characterized by poor low temperatures properties. They have the additional advantage of being non-pigmenting and hence clear flame retardant formulations can be obtained.

### Secondary plasticizers (or extenders)

For price optimization of PVC formulations, secondary plasticizers (also indicated as extenders) such as aromatic hydrocarbons or paraffinic oils are used. Secondary plasticizers are not possible to be used as the only plasticizer in PVC, because of low compatibility causing migration and poor low temperature properties, so they have to be used together with a primary plasticizers.

### Secondary FR (Flame Retardant) plasticizer

Secondary plasticizers containing halogen such as chlorinated paraffins or chlorinated oils are used. Chlorinated paraffin or oils also act as flame retardant. Chlorinated paraffin are viscous and have limited compatibility. In using chlorinated paraffin, it is necessary to substitute the primary plasticizer with twice as much chlorinated paraffin to ensure the same degree of plastification. Chlorinated oils are less viscous and the plasticizing efficiency is better, but adversely affects gelation rates. Chlorinate paraffines, especially combined with antimony trioxide, have negative effect on thermal and photo-stability and cold temperature resistance. Also bromine containing compounds such as Tetrabromo dioctyl phthalate find use as secondary plasticizers in flame retardant PVC formulations. The primary flame retarding mechanism of these brominated compounds, involves the release of halogen (bromine) into the vapor phase to inhibit combustion. Since bromine tends to be more active in the vapor phase than the chlorine which normally evolves from PVC during combustion, improvements in flame retardancy are often seen when this plasticizer is used in flexible PVC formulations. Due to its bromine content, tetrabromo dioctyl phthalate tends to develop more smoke than other plasticizers during combustion.

### Stabilizers and co-stabilizers

PVC must be stabilized, in order to be processed, against the action of heat required at processing temperatures. When PVC is processed as pure polymer, it would rapidly and completely decompose at the required temperature for molding or extrusion (150°C - 200°C). The necessary protection is provided by the addition of heat stabilizers. PVC molecule is unstable to heat and light. Heating PVC causes breakage of the polymer chains, liberating hydrochloric acid in the gaseous state. HCl catalyzes additional degradation, releasing large quantities of corrosive HCl. This autocatalytic reaction begins at ca. 100°C, while at 180°C a marked brown color occurs after few minutes.

A majority of stabilizers contain metal elements which react with HCl and inhibit further degradation. They are metal salts, soaps or complexes. Heat stabilizers retard dehydrochlorination and auto-oxidation and reduce fragmentation by substitution of structural defeats for more stable groups in the polymer chain, scavenge the evolved hydrogen chloride and block the free radicals formed during the degradation process. The main classes of PVC stabilizers are complex mixtures of metal soaps with co-stabilizers, antioxidants, solvents, lubricants, etc. The most used mixture of metals are Ba/Zn and Ca/Zn. Mixed metals stabilizers can be liquid or solid.

Epoxidized soybean oil is an example of co-stabilizer that very often is used in addition with Ca/Zn stabilizers. Exposure to ultraviolet radiation also breaks up polymer chains, but is slower than heat degradation. UV stabilizers have generally high absorption coefficients for UV radiation in the 290-315 nm range, and exert their effect at relatively low incorporation levels.

### Lubricants

Lubricants are processing additives. Lubricant actions and effects can be divided into external and internal, some lubricant can combine both functions. The external lubrication effect is the reduction of the coefficient of friction and adhesion between hot PVC composition and the surfaces of the processing machine. The basic internal lubrication effect is the lowering of the internal friction of the composition, which reduce melt viscosity. Whereas rigid PVC compositions generally require both internal and external lubricant, usually in PVC-P only external lubricant are considered, as in PVC-P the plasticizer will also provide internal lubrication.

### Fillers

Certain minerals, especially some naturally occurring silicates and natural carbonates, represent some of the most widely used fillers for PVC. They are used for instance in insulating and jacket formulas for wire and cable to reduce the price of the compound and to improve electrical as well as other properties. Calcium carbonate can provide favorable effects on flow and processing behavior of the PVC mass. Primarily calcium carbonate types such as chalk, limestone and marble of various fineness are deployed. Their surfaces can be treated or untreated. Treated surfaces lead to a reduction of plasticizer absorption of the filler material.

### Flame retardants

Of those which are in the form of solid particulates, those of greatest interest are antimony trioxide and their mixture with zinc borate. They are used in low proportion, (up to about 10 phr) not to affect drastically the mechanical and physical properties of PVC. Antimony trioxide also acts as a white pigment. Therefore, its use has a dramatic effect on the coloring of PVC formulations. The effect is partially reduced when it is used together with borates. Antimony trioxide particle size has a role in the pigmenting properties, as coarser grades are less opaque, and allow the use of lower pigment loading.

In applications where the pigmenting properties of antimony trioxide are an issue, antimony pentoxide and sodium antimonate are available options. Although these materials are more expensive than antimony trioxide, they find use in both translucent and transparent formulations. In contrast to the polymer containing antimony trioxide, they are able to confer to the resulting material a refractive index similar to that of most of the polymer systems.

Substantial loading (i.e. about 40 - 100 phr or even more) with metal hydrates like aluminum or magnesium hydroxide is necessary to realize the effects of these additives, so that the effect on the mechanical properties as well as on certain other properties of the PVC, can be considerable.

Surprisingly, the objects of the invention are achieved by plasticized PVC resin compositions comprising at least an inorganic hypophosphite, also named hypophosphorus acid metal salt or inorganic phosphinate, in addition to conventional additives.

Hypophosphorus acid metal salts, also called inorganic phosphinates or inorganic hypophosphites (phosphorus valence state = +1) are known as effective halogen free flame retardant additives for polymers.

Hypophosphites have the following chemical formula:

Me(H₂PO₂)ₙ

where:
"n" is an integer number ranging from 1 to 4 in dependence of the valence of the metal Me. The metal is any atom belonging to the groups I, II, III and IV of the periodic table of the elements.

Hypophosphite of sodium and calcium are widely commercially available and they are normally produced by reacting the corresponding metal hydroxide on yellow phosphorus, as for instance:

P₄ + 2Ca(OH)₂ + H₂O → Ca(H₂PO₂)₂ + CaHPO₃ + PH₃

Hypophosphite of metals other than calcium and sodium are normally produced through the hypophosphorus acid reaction on the metal hydroxide or by exchange reaction with the corresponding soluble metal salts (see for example "Hypophosphorus Acid and its salts", Russian Chemical Review, 44 (12), 1975). Thermoplastic polyamides moulding materials containing hypophosphites have been described in the art, see for instance WO 09/010812 and WO 2005/075566. According to WO 09/010812, a polymer compositions, particularly polyesters or polyamides, comprising hypophosphites coated with inorganic hydrates and/or organic salts show good flame retardant performance but, at the same time, showed reduced polymer degradation compared to a corresponding polymer composition comprising uncoated hypophosphites.

According to WO 2005/075566, a polyamide is made flame retardant by comprising at least aluminium hypophosphite in the range 1% to 30% by weight.

However, hypophosphites are not known as flame retardant agents in halogen containing plasticized polymers like PVC.

The choice of hypophosphites is subjected to a number of critical factors. Particularly, suitable hypophosphites must be characterized by sufficient thermal stability to overcome melt processing at temperature higher than about 200°C. In case they do form hydrates they must be used in the corresponding anhydrous form and they must not be hygroscopic when successively exposed to ambient humidity. Examples of such hypophosphites are aluminum hypophosphite (CAS 7784-22-7), calcium hypophosphite (CAS 7789-79-9), manganese hypophosphite (10043-84-2), magnesium hypophosphite (CAS 10377-57-8), zinc hypophosphite (CAS 15060-64-7), barium hypophosphite (CAS 171258-64-3). Most preferred in the purpose of the present invention are aluminum and calcium hypophosphites.

Aluminum hypophosphite, corresponding to chemical formula Al(H₂PO₂)₃, is currently produced by Italmatch Chemicals Spa ("Phoslite IP-A") in a white powder form with a low humidity level, high purity and various PSD suitable for thermoplastic processing.

Calcium hypophosphite, corresponding to chemical formula Ca(H₂PO₂)₂, is also currently produced by Italmatch Chemicals Spa ("Phoslite IP-C").

Aluminum and calcium hypophosphite, being flammable powders as most of anhydrous hypophosphites, are often commercialized as dry powders blended with other solid flame retardants agents, in masterbatch or in paste form, for making transport and manipulation operations easier.

Hypophosphites are new flame retardant agents when used in PVC formulations. It is possible to use them advantageously together with already existing primary and secondary plasticizers to give flame retardant PVC formulations exempt from antimony trioxide. Several technical examples are present in the following experimental part that will clarify further the scope of the invention.

### EXPERIMENTAL PART

In the reported examples, the following components were used:
*PVC Polymer* PVC K70 (BASF)
*Primary Plasticizer:* DOP (Palatinol DOP),
*Primary FR* (Flame *Retardant*) *Plasticizers:* Alkyl Aryl Phosphate ester (Santicizer 2148)
*Secondary FR* (Flame Retardant) *plasticizer* Chlorinated paraffine (Cereclor 70), Tetrabromopthalate Ester (BroFlam 45-Z)
*Stabilizers: Ca*/*Zn* (Repak G-NT/7526)
*Co-stabilizer:* Epoxidized soybean oil (Reaflex EP/6)
*Flame Retardant agents (FR):* Sb₂O₃ (PSD= 1-1,5 microns), Campine Z O(Sb₂O₃ with PSD average = 8-13 microns),
Zinc Borate (Firebrake ZB), Al(OH)₃ (Martinal OL104)
Aluminium hypophosphite: (Phoslite IP-A, currently manufactured by Italmatch Chemicals), hereafter indicated as "IP-A"
Calcium hypophosphite: (Phoslite IP-C, currently manufactured by Italmatch Chemicals), hereafter indicated as "IP-C"

### Examples and Comparative Examples 1-23

Components reported in table 1, 2 and 3 are compounded in a 10 cc laboratory Banbury (Braebender) with a temperature of 185°C and 60 rpm. Compression moulded plaques are moulded at 190°C for 10 minutes at the thickness indicated in the table. Flammability have been reported according to UL-94 procedure. When tests do not meet V0, V1 and V2 an NC classification has been given. The Oxygen index (LOI) is often given as an expression of inflammability. This unit represents how much Oxygen must be present in the surrounding atmosphere so that the compound in general will burn, so of course higher the LOI better the resistance to burning. LOI it is measured according to ASTM D2863.

**Table 1: Examples and Comparative Examples 1-6**

| | *Function* | **Comp. 1** | **Comp. 2** | **Comp. 3** | **Comp. 4** | **Ex. 5** | **Ex. 6** |
|---|---|---|---|---|---|---|---|
| PVC-K70 | *Resin* | 100 | 100 | 100 | 100 | 100 | 100 |
| Palatinol DOP | *Primary plasticizer* | 50 | 50 | 50 | 50 | 50 | 50 |
| Repak G-NT/7526 | *Stabilizer* | 3 | 3 | 3 | 3 | 3 | 3 |
| Reaflex EP/6 | *Co-stabilizer* | 5 | 5 | 5 | 5 | 5 | 5 |
| Phoslite IP-C | *Flame Retardant (invention)* | | | | | 3 | |
| Phoslite IP-A | *Flame Retardant (invention)* | | | | | | 3 |
| Sb₂O₃ | *Flame Retardant* | | 3 | | | | |
| Firebrake ZB | *Flame Retardant* | | | 3 | | | |
| Martinal OL104 | *Flame Retardant* | | | | 50 | | |
| UL-94 (1,6mm) | | NC | V0 | NC | V0 | V0 | V0 |
| LOI (3mm, %) | | 23,5 | 27,5 | 24 | 26 | 25,5 | 26 |

### Comments to Examples and Comparative Examples reported in table 1

Comparative Example 1 show how a standard PVC formulation that does not comprise any flame retardant agent (neither according to the prior art nor according to the present invention) is not classified according to UL-94 on specimens of 1,6 mm. Comparative Example 2 and 4 show that antimony trioxide and aluminum hydroxide taken alone, are efficient in reaching the UL-94 V0 classification and increasing the LOI. However, in case of the formulation where aluminum hydroxide is taken as flame retardant agent, the necessary amount to be added to the formulation is quite large. Examples 5 and 6 show how aluminum and calcium hypophosphites are efficient as taken alone, in increasing LOI and reaching UL-94 V0 classification even though they are added to the PVC formulation in lower amount compared to the necessary amount of aluminum hydroxide.

From the above experimental data it is evident that aluminum and calcium hypophosphites when added (alone or in mixtures) as flame retardant agents to the PVC formulation, are able to give a very good effect (UL-94 V0 classification) as well as quite increased LOI value with respect to a corresponding formulation without any flame retardant agent. In addition, the required amount of aluminum and calcium hypophosphites is significantly lower than the amount of aluminum hydroxide necessary in a corresponding PVC formulation in order to reach the same UL-94 V0 classification as well as LOI value. As far as Comparative Example 3 is concerned, it has to be noted that the sole presence of zinc borate as flame retardant agent is not enough to confer UL-94 V0 classification and high LOI value to a corresponding PVC formulation.

**Table 2: Examples and Comparative Examples 6- 17:**

| | *Function* | Comp. 6 | Comp. 7 | Comp. 8 | Comp. 9 | Comp. 10 | Comp. 11 | Comp. 12 | Comp. 13 | Ex. 14 | Ex. 15 | Ex. 16 | Ex. 17 |
|---|---|---|---|---|---|---|---|---|---|---|---|---|---|
| PVC-K70 | *Resin* | 100 | 100 | 100 | 100 | 100 | 100 | 100 | 100 | 100 | 100 | 100 | 100 |
| Palatinol DOP | *Primary plasticizer* | 45 | 40 | 25 | 25 | 40 | 25 | | | 45 | 40 | 25 | |
| Santicizer 2148 | *Primary FR plasticizer* | 5 | 10 | 25 | 25 | 10 | 25 | 50 | 50 | 5 | 10 | 25 | 50 |
| Repak G-NT/7526 | *Stabilizer* | 3 | 3 | 3 | 3 | 3 | 3 | 3 | 3 | 3 | 3 | 3 | 3 |
| Reaflex EP/6 | *Co-stabilizer* | 5 | 5 | 5 | 5 | 5 | 5 | 5 | 5 | 5 | 5 | 5 | 5 |
| Phoslite IP-A | *Flame Retardant (invention)* | | | | | | | | | 3 | 3 | 3 | 3 |
| Sb2O3 | *Flame Retardant* | | | | 3 | | | | 3 | | | | |
| Firebrake ZB | *Flame Retardant* | | | | | 3 | 3 | | | | | | |
| UL-94 (1,6mm) | | NC | V0 | V0 | V0 | NC | V0 | V0 | V0 | V0 | V0 | V0 | V0 |
| LOI (3mm, %) | | 24 | 25 | 27 | 30 | 25 | 27,5 | 30 | 31 | 26 | 27 | 29 | 33 |

### Comments to Examples and Comparative Examples reported in table 2.

In Comparative Examples 6,7,8 and 12 of table 2 it is shown how an FR primary plasticizer compound (Santicizer 2148) would be able to confer flame retardant characteristic to the PVC formulation even without any additional flame retardant. However, FR primary plasticizers are characterized by poor low temperatures properties and they do often need Sb2O3 as a synergic to booster flammability properties (LOI).

Examples 14 to 17 according to the present invention, compared with Comparative Examples 9,10,11 and 13 show how the Flame Retardant of the present invention can effectively improve the FR properties of plasticized PVC containing primary FR plasticizers, without the use of Sb2O3.

**Table 3: Examples and Comparative Examples 18- 23:**

| | *Function* | Comp. 18 | Comp. 19 | Comp. 20 | Comp. 21 | Ex. 22 | Ex. 23 |
|---|---|---|---|---|---|---|---|
| PVC-K70 | *Resins* | 100 | 100 | 100 | 100 | 100 | 100 |
| Palatinol DOP | *Primary plasticizer* | 50 | 50 | 50 | 50 | 50 | 50 |
| Cereclor 70 | *Secondary FR plasticizer* | 10 | | 10 | | 10 | |
| Bro-Flam 45-Z | *Secondary FR plasticizer* | | 10 | | 10 | | 10 |
| Repak G-NT/7526 | *Stabilizer* | 3 | 3 | 3 | 3 | 3 | 3 |
| Reaflex EP/6 | *Co-stabilizer* | 5 | 5 | 5 | 5 | 5 | 5 |
| Phoslite IP-A | *Flame retardant (invention)* | | | | | 3 | 3 |
| Sb2O3 | *Flame retardant* | | | 3 | 3 | | |
| UL-94 (1,6mm) | | NC | NC | V0 | V0 | V0 | V0 |
| LOI (3mm, %) | | 24 | 25 | 28 | 29,5 | 27 | 27,5 |

### Comments to Examples and Comparative Examples reported in table 3

The above results indicate that Examples 22 and 23 according to the present invention are able to rank UL-94 V0 classification as well as they do have significant high LOI value in the complete absence of any antimony based flame retardant compound.

## Claims

1. Polyvinyl chloride (PVC) resin composition comprising at least an inorganic hypophosphite having the following formula:
Me(H₂PO₂)ₙ
where Me is a metal and "n" is an integer number ranging from 1 to 4 in dependence of the valence of the metal Me, in addition to conventional additives, like stabilizers, co-stabilizers, lubricants, fillers, colorants.

2. PVC resin composition according to claim 1, **characterized in that** said metal Me is selected among the atoms belonging to the groups I, II, III and IV of the periodic table of the elements or their mixtures.

3. PVC resin compositions according to claim 2, **characterized in that** said Metal Me is selected among: aluminum hypophosphite, calcium hypophosphite, manganese hypophosphite, magnesium hypophosphite, zinc hypophosphite, barium hypophosphite.

4. PVC resin compositions according to claim 3, **characterized in that** said metal Me is selected among: aluminum hypophosphite, calcium hypophosphite.

5. PVC resin composition according to claim 1, **characterized in that** it further comprises at least one of the following additional components: primary plasticizer, primary FR plasticizer, secondary plasticizer, secondary FR plasticizer.

6. PVC resin composition according to claim 1, **characterized in that** said PVC is selected among: suspension grade PVC, emulsion grade PVC, bulk polymerized PVC, copolymer PVC, or chlorinated PVC (CPVC).

7. PVC resin composition according to claim 5, **characterized in that** the primary plasticizer is a phthalate plasticizer.

8. PVC resin composition according to claim 7, **characterized in that** said primary plasticizer is selected among: Di Octyl Pthalate (DOP), Di isononyl phthalate (DINP), Tri octyl trimellitate (TOTM), Di isodecyl phthalate (DIDP), Di isotridecyl phthalate (DITP).

9. PVC resin composition according to claim 5, **characterized in that** said primary plasticizer is a non-phthalate plasticizer.

10. PVC resin composition according to claim 1, **characterized in that** said stabilizers and co-stabilizers are selected among: metal salts, soaps or their mixtures.

11. PVC resin composition according to claim 5, **characterized in that** said primary FR plasticizer is a phosphate plasticizer selected among÷ triaryl phosphates, alkyl diaryl phosphates, and their mixtures.

12. PVC resin composition according to claim 5, **characterized in that** said secondary plasticizer is selected among: aromatic hydrocarbons, paraffinic oils and their mixtures.

13. PVC resin composition according to claim 5, **characterized in that** said secondary FR plasticizer is selected among: chlorinated oils, chlorinated paraffins, brominated phthalate or non-phthalate.

14. PVC resin composition according to claim 5, **characterized in that** it is free from antimony trioxide.

15. Use of at least an inorganic hypophosphite having the following formula:
Me(H₂PO₂)ₙ
where Me is a metal and "n" is an integer number ranging from 1 to 4 in dependence of the valence of the metal Me, as flame retardant agent in a plasticized polyvinyl chloride (PVC) resin composition.

16. Use of a Plasticized Polyvinyl chloride (PVC) resin composition according to claim 1 for the preparation of PVC based compounds.

## Patentansprüche

1. Polyvinylchlorid(PVC)-Harzzusammensetzung, umfassend mindestens ein anorganisches Hypophosphit mit der folgenden Formel:
Me(H₂PO₂)ₙ,
wobei Me ein Metall ist und "n" eine ganze Zahl im Bereich von 1 bis 4 in Abhängigkeit von der Wertigkeit des Metalls Me, zusätzlich zu herkömmlichen Additiven, wie Stabilisatoren, Co-Stabilisatoren, Schmierstoffe, Füllstoffe, Farbstoffe.

2. PVC-Harzzusammensetzung nach Anspruch 1, **dadurch gekennzeichnet, dass** das Metall Me ausgewählt ist aus Atomen, die zu den Gruppen I, II, III und IV des Periodensystems der Elemente gehören, oder deren Mischungen.

3. PVC-Harzzusammensetzungen nach Anspruch 2, **dadurch gekennzeichnet, dass** das Metall Me ausgewählt ist aus: Aluminiumhypophosphit, Calciumhypophosphit, Manganhypophosphit, Magnesiumhypophosphit, Zinkhypophosphit, Bariumhypophosphit.

4. PVC-Harzzusammensetzungen nach Anspruch 3, **dadurch gekennzeichnet, dass** das Metall Me ausgewählt ist aus: Aluminiumhypophosphit, Calciumhypophosphit.

5. PVC-Harzzusammensetzung nach Anspruch 1, **dadurch gekennzeichnet, dass** sie ferner mindestens eine der folgenden zusätzlichen Komponenten enthält: primärer Weichmacher, primärer FR-Weichmacher, sekundärer Weichmacher, sekundärer FR-Weichmacher.

6. PVC-Harzzusammensetzung nach Anspruch 1, **dadurch gekennzeichnet, dass** das PVC ausgewählt ist aus: Suspensionsgrad-PVC, Emulisionsgrad-PVC, Massenpolymerisations-PVC, Copolymer-PVC oder chloriertes PVC (CPVC).

7. PVC-Harzzusammensetzung nach Anspruch 5, **dadurch gekennzeichnet, dass** der primäre Weichmacher ein Phthalat-Weichmacher ist.

8. PVC-Harzzusammensetzung nach Anspruch 7, **dadurch gekennzeichnet, dass** der primäre Weichmacher ausgewählt ist aus: Dioctylpthalat (DOP), Diisononylphthalat (DINP), Trioctyltrimellitat (TOTM), Diisodecylphthalat (DIDP), Diisotridecylphthalat (DITP).

9. PVC-Harzzusammensetzung nach Anspruch 5, **dadurch gekennzeichnet, dass** der primäre Weichmacher ein Nicht-Phthalat-Weichmacher ist.

10. PVC-Harzzusammensetzung nach Anspruch 1, **dadurch gekennzeichnet, dass** die Stabilisatoren und Co-Stabilisatoren ausgewählt sind aus: Metallsalzen, Seifen oder deren Mischungen.

11. PVC-Harzzusammensetzung nach Anspruch 5, **dadurch gekennzeichnet, dass** der primäre FR-Weichmacher ein Phosphat-Weichmacher ist, ausgewählt aus Triarylphosphaten, Alkyldiarylphosphaten und deren Mischungen.

12. PVC-Harzzusammensetzung nach Anspruch 5, **dadurch gekennzeichnet, dass** der sekundäre Weichmacher ausgewählt ist aus: aromatischen Kohlenwasserstoffen, paraffinischen Ölen und deren Mischungen.

13. PVC-Harzzusammensetzung nach Anspruch 5, **dadurch gekennzeichnet, dass** der sekundäre FR-Weichmacher ausgewählt ist aus: chlorierten Ölen, chlorierten Paraffinen, bromiertem Phthalat oder Nicht-Phthalat.

14. PVC-Harzzusammensetzung nach Anspruch 5, **dadurch gekennzeichnet, dass** sie frei von Antimontrioxid ist.

15. Verwendung von mindestens einem anorganischen Hypophosphit mit der folgenden Formel:
Me(H₂PO₂)ₙ,
wobei Me ein Metall ist und "n" eine ganze Zahl im Bereich von 1 bis 4 in Abhängigkeit von der Wertigkeit des Metalls Me als Flammschutzmittel in einer plastifizierten Polyvinylchlorid(PVC)-Harzzusammensetzung.

16. Verwendung einer plastifizierten Polyvinylchlorid(PVC)-Harzzusammensetzung nach Anspruch 1 zur Herstellung von Verbindungen auf PVC-Basis.

## Revendications

1. Composition de résine de polychlorure de vinyle (PVC) comprenant au moins un hypophosphite inorganique ayant la formule suivante :
Me(H₂PO₂)ₙ
dans laquelle Me est un métal et « n » est un nombre entier allant de 1 à 4 qui dépend de la valence du métal Me, en plus des additifs classiques, comme les stabilisants, les co-stabilisants, les lubrifiants, les charges, les colorants.

2. Composition de résine de PVC selon la revendication 1, **caractérisée en ce que** ledit métal Me est choisi parmi les atomes appartenant aux groupes I, II, III et IV du tableau périodique des éléments ou leurs mélanges.

3. Compositions de résine de PVC selon la revendication 2, **caractérisées en ce que** ledit métal Me est choisi parmi : l'hypophosphite d'aluminium, l'hypophosphite de calcium, l'hypophosphite de manganèse, l'hypophosphite de magnésium, l'hypophosphite de zinc, l'hypophosphite de baryum.

4. Compositions de résine de PVC selon la revendication 3, **caractérisées en ce que** ledit métal Me est choisi parmi : l'hypophosphite d'aluminium, l'hypophosphite de calcium.

5. Composition de résine de PVC selon la revendication 1, **caractérisée en ce qu'**elle comprend en outre au moins un des composants supplémentaires suivants : un plastifiant primaire, un plastifiant FR primaire, un plastifiant secondaire, un plastifiant FR secondaire.

6. Composition de résine de PVC selon la revendication 1, **caractérisée en ce que** ledit PVC est choisi parmi : un PVC de qualité en suspension, un PVC de qualité en émulsion, un PVC polymérisé en masse, un PVC copolymère, ou un PVC chloré (CPVC).

7. Composition de résine de PVC selon la revendication 5, **caractérisée en ce que** le plastifiant primaire est un plastifiant de type phtalate.

8. Composition de résine de PVC selon la revendication 7, **caractérisée en ce que** ledit plastifiant primaire est choisi parmi : le phtalate de dioctyle (DOP), le phtalate de diisononyle (DINP), le trimellitate de trioctyle (TOTM), le phtalate de diisodécyle (DIDP), le phtalate de diisotridécyle (DITP).

9. Composition de résine de PVC selon la revendication 5, **caractérisée en ce que** ledit plastifiant primaire est un plastifiant non-phtalate.

10. Composition de résine de PVC selon la revendication 1, **caractérisée en ce que** lesdits stabilisants et co-stabilisants sont choisis parmi : les sels métalliques, les savons et leurs mélanges.

11. Composition de résine de PVC selon la revendication 5, **caractérisée en ce que** ledit plastifiant FR primaire est un plastifiant à base de phosphate choisi parmi les phosphates de triaryle, les phosphates d'alkyle et de diaryle, et leurs mélanges.

12. Composition de résine de PVC selon la revendication 5, **caractérisée en ce que** ledit plastifiant secondaire est choisi parmi : les hydrocarbures aromatiques, les huiles paraffiniques et leurs mélanges.

13. Composition de résine de PVC selon la revendication 5, **caractérisée en ce que** ledit plastifiant FR secondaire est choisi parmi : les huiles chlorées, les paraffines chlorées, un phtalate bromé ou un non-phtalate.

14. Composition de résine de PVC selon la revendication 5, **caractérisée en ce qu'**elle est exempte de trioxyde d'antimoine.

15. Utilisation d'au moins un hypophosphite inorganique ayant la formule suivante :
Me(H₂PO₂)ₙ
dans laquelle Me est un métal et « n » est un nombre entier allant de 1 à 4 qui dépend de la valence du métal Me, comme agent ignifuge dans une composition de résine de polychlorure de vinyle (PVC) plastifié.

16. Utilisation d'une composition de résine de polychlorure de vinyle (PVC) plastifié selon la revendication 1 pour la préparation de composés à base de PVC.
